# EUROPEAN PATENT APPLICATION

(11) **EP 4 700 538 A1**
(43) Date of publication of application: **25.02.2026**
(21) Application number: 25734737.7
(22) Date of filing: 08.07.2025
(51) Int. Cl.: G06F 1/16, G06F 1/20, C09J 7/00

(54) **ELECTRONIC DEVICE INCLUDING SUPPORT STRUCTURE**

(30) Priority: 08.07.2024 KR 20240089886; 20.09.2024 KR 20240127371
(71) Applicant: Samsung Electronics Co., Ltd, Suwon-si, Gyeonggi-do 16677 (KR)
(72) Inventor: KIM, Daeyoung, Suwon-si, Gyeonggi-do 16677 (KR)
(74) Representative: Gulde & Partner
(86) International application number: PCT/KR2025/009874
(87) International publication number: WO 2026/014885

(57) **Abstract**

An embodiment disclosed herein may provide an electronic device. The electronic device may include a housing forming a portion of an exterior of the electronic device and including a support structure and a rear plate, wherein the support structure includes a first region, a second region and a partition wall disposed between the first region and the second region, and the partition wall includes an opening, a battery disposed between the second region of the support structure and the rear plate, a protection member disposed to block at least a portion of the opening, and a heat dissipation member extending from a portion of the first region, through the opening, to a portion of the second region. A portion of the heat dissipation member may be disposed between the second region and the battery.

## Description

### [Technical Field]

The disclosure relates to an electronic device including a support structure.

### [Background Art]

Due to advancement in information and communication technology and semiconductor technology, various functions are being integrated into a single portable electronic device. For example, an electronic device may implement not only communication functions, but also entertainment functions such as gaming, multimedia functions such as music/video playback, communication and security functions for mobile banking, or schedule management and electronic wallet functions. These electronic devices are being miniaturized to be conveniently carried by users.

The above-described information may be provided as related art for the purpose of helping understand the disclosure. No claim or determination is made as to whether any of the foregoing may be applied as prior art with respect to the disclosure.

### [Detailed Description of the Invention]

### [Technical Solution]

An embodiment disclosed herein may provide an electronic device. The electronic device may include a housing forming a portion of an exterior of the electronic device and including a support structure and a rear plate, wherein the support structure includes a first region, a second region, and a partition wall disposed between the first region and the second region, and the partition wall including an opening, a battery disposed between the second region of the support structure and the rear plate, a protection member disposed to block at least a portion of the opening, and a heat dissipation member extending from a portion of the first region, through the opening, to a portion of the second region. A portion of the heat dissipation member may be disposed between the second region and the battery.

An embodiment disclosed herein may provide an electronic device. The electronic device may include a housing including a support structure and a rear plate disposed to face the support structure, the support structure including a first region and a second region spaced apart from the first region, a battery disposed between the second region of the support structure and the rear plate, a protection member disposed between the first region and the second region, and a heat dissipation member extending from a portion of the first region, through the protection member, to a portion of the second region.

### [Brief Description of Drawings]

The above-described aspects or other aspects, configurations, and/or advantages regarding an embodiment of the disclosure may become more apparent through the following detailed description made with reference to the accompanying drawings.
FIG. 1 is a block diagram of an electronic device according to an embodiment of the disclosure in a network environment.
FIG. 2 is a view illustrating the unfolded state of an electronic device 101 according to an embodiment of the disclosure.
FIG. 3 is a view illustrating the folded state of the electronic device 101 according to an embodiment of the disclosure.
FIG. 4 is an exploded perspective view of an electronic device according to an embodiment of the disclosure.
FIG. 5A is a rear view of the electronic device according to an embodiment of the disclosure.
FIG. 5B is a cross-sectional view taken along line A-A' of FIG. 5, according to an embodiment of the disclosure.
FIG. 5C is a cross-sectional side view taken along line B-B' of FIG. 5A, according to an embodiment of the disclosure.
FIG. 6 is an exploded perspective view of the electronic device according to an embodiment.
FIG. 7A is a rear view illustrating a support structure and a heat dissipation structure of an electronic device according to an embodiment of the disclosure.
FIG. 7B is a view illustrating a support structure and a heat dissipation structure of an electronic device according to an embodiment of the disclosure.
FIG. 7C is a perspective view illustrating a protection member disposed in the support structure of an electronic device according to an embodiment of the disclosure.
FIG. 8 is a cross-sectional view illustrated a stacked structure of a protection member of an electronic device according to an embodiment of the disclosure.
FIG. 9A is a rear view illustrating a support structure and a heat dissipation structure of an electronic device according to an embodiment of the disclosure.
FIG. 9B is an enlarged view of portion C of FIG. 9A according to an embodiment of the disclosure.
FIG. 9C is an enlarged view of portion D of FIG. 9A according to an embodiment of the disclosure.
FIG. 10A is a rear view of an electronic device according to an embodiment of the disclosure.
FIG. 10B is a side cross-sectional view taken along line G-G' of FIG. 10A according to an embodiment of the disclosure.
FIG. 10C is a perspective view illustrating a support structure according to an embodiment of the disclosure.
FIG. 10D is a perspective view illustrating a protection member according to an embodiment of the disclosure.
FIG. 11A is a rear view of an electronic device according to an embodiment of the disclosure.
FIG. 11B is a side cross-sectional view taken along line I-I' of FIG. 11A according to an embodiment of the disclosure.
FIG. 11C is a perspective view illustrating a support structure according to an embodiment of the disclosure.
FIG. 11D is a perspective view illustrating a protection member according to an embodiment of the disclosure.

Throughout the appended drawings, like reference numerals may be assigned to like components, configurations, and/or structures.

### [Mode for Carrying out the Invention]

The following description provided with reference to the accompanying drawings is provided to aid in a comprehensive understanding of various embodiments of the disclosure defined by the claims and their equivalents. The following description includes various specific details for the purpose of better understanding, but these should be regarded merely as examples. Accordingly, a person ordinarily skilled in the art will recognize that various modifications and alterations to the various embodiments described herein may be made without departing from the scope and spirit of the disclosure. In addition, descriptions of known functions and configurations may be omitted for clarity and conciseness.

The terms and words used in the following description and claims are not to be interpreted as being limited to bibliographic meanings, but are intended to be used by the inventors to clearly and consistently describe the disclosure. Accordingly, it will be apparent to those skilled in the art that the following description of various embodiments of the disclosure is provided for illustrative purposes only and is not intended to limit the disclosure as defined by the appended claims and their equivalents.

The singular forms "a," "an," and "the" are intended to include the plural forms as well, unless the context clearly indicates otherwise. Thus, for example, a reference to "a component surface" is intended to include a reference to one or more of such surfaces.

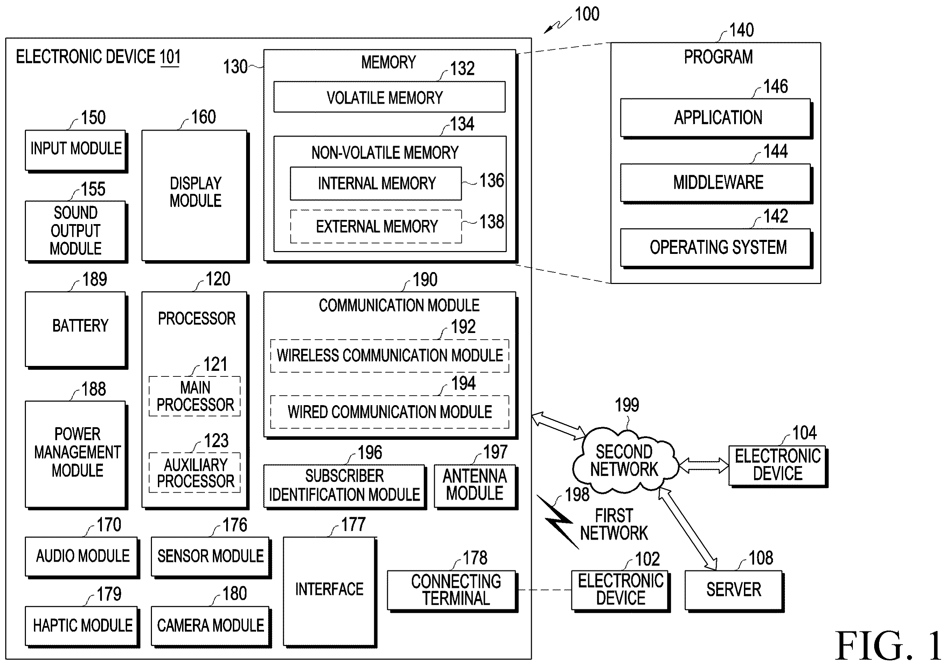

FIG. 1 is a block diagram illustrating an electronic device in a network environment according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, a length direction, a width direction, and/or a thickness direction of an electronic device may be mentioned. The length direction may be defined as the "Y-axis direction," the width direction may be defined as the "X-axis direction," and/or the thickness direction may be defined as the "Z-axis direction." In an embodiment, the direction in which a component is oriented may be mentioned along with the orthogonal coordinate system illustrated in the drawings, as well as the "negative/positive symbol (-/+)." For example, the front surface of an electronic device or a housing may be defined as a "surface oriented in the +Z direction," and the rear surface may be defined as a "surface oriented in the -Z direction." In an embodiment, a side surface of the electronic device or the housing may include a region oriented in the +X direction, a region oriented in the +Y direction, a region oriented in the -X direction, and/or a region oriented in the -Y direction. In another embodiment, the "X-axis direction" may include both the "-X direction" and the "+X direction." It is noted that these are based on the orthogonal coordinate system illustrated in the drawings for the sake of brevity of description, and the description of these directions or components does not limit an embodiment disclosed herein. For example, depending on whether the electronic device is in an unfolded or folded state, the direction in which the aforementioned front or rear surface may vary, and the aforementioned directions may be interpreted differently depending on a user's holding habits.

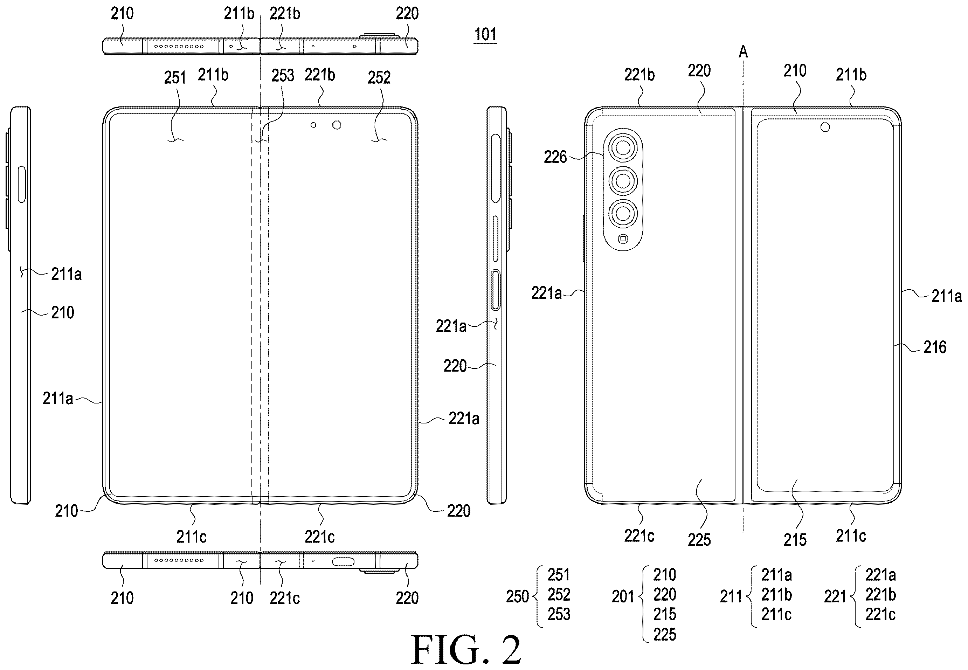

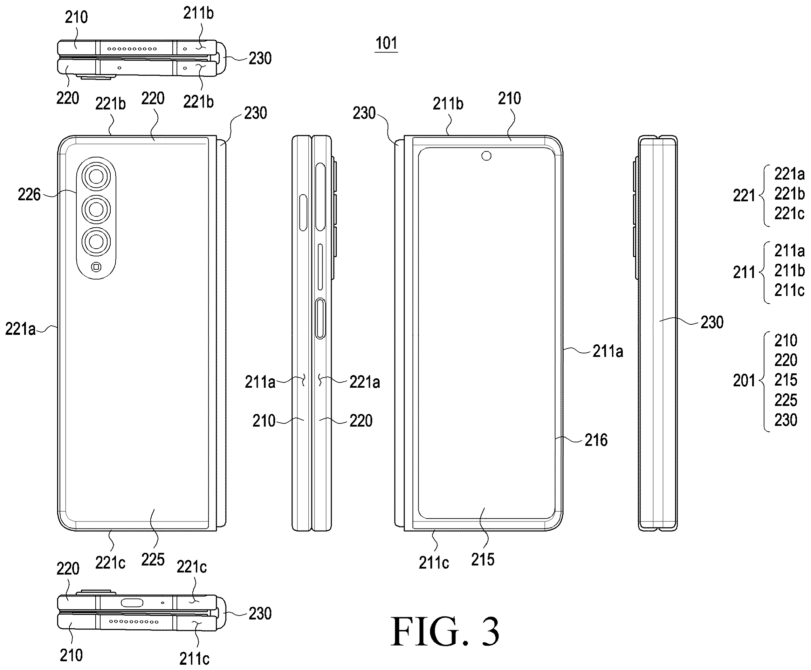

FIG. 2 is a view illustrating an electronic device according to an embodiment of the disclosure in an unfolded state. FIG. 3 is a view illustrating the electronic device according to an embodiment of the disclosure in a folded state. The electronic device 101 may be an example of the electronic device 101 illustrated in FIG. 1, and may be a foldable or bendable electronic device.

Referring to FIGS. 2 and 3, in an embodiment, the electronic device 101 may include a foldable housing 201 and a flexible or foldable display 250 (hereinafter, simply referred to as a "display 250") (e.g., the display device 160 in FIG. 1) disposed in a space defined by the foldable housing 201. According to an embodiment, the surface on which the display 250 is disposed (or the surface on which the display 250 is visible from the outside of the electronic device 101) may be defined as the front surface of the electronic device 101. In addition, the surface opposite to the front surface may be defined as the rear surface of the electronic device 101. Furthermore, the surface surrounding the space between the front surface and the rear surface may be defined as the side surface of the electronic device 101.

According to an embodiment, the foldable housing 201 may include a first housing part 210, a second housing part 220 including a sensor region 222, a first rear plate 215, a second rear plate 225, and a hinge structure 230. Here, the hinge structure 230 may include a hinge cover which covers a foldable portion of the foldable housing 201. The foldable housing 201 of the electronic device 101 is not limited to the shape and assembly illustrated in FIGS. 2 and 3, but may be implemented by a combination and/or an assembly of different shapes or components. For example, the first housing part 210 and the first rear plate 215 may be integrally configured, and the second housing part 220 and the second rear plate 225 may be integrally configured.

According to an embodiment, the first housing part 210 may be connected to the hinge structure 230, and may include a first front surface oriented in a first direction and a first rear surface oriented in a direction opposite to the first direction. The second housing part 220 may be connected to the hinge structure 230, and may include a second front surface oriented in a second direction and a second rear surface oriented in a direction opposite to the second direction. The second housing part 220 may rotate relative to the first housing part 210 about the hinge structure 230. The electronic device 101 may be deformable to the folded state or the unfolded state.

According to an embodiment, the first housing part 210 may include a first side surface 211a spaced apart from and arranged parallel to a folding axis A of the hinge structure 230 between the first front surface and the first rear surface, and the second housing part 220 may include a second side surface 221a spaced apart from and arranged parallel to the folding axis A of the hinge structure 230 between the second front surface and the second rear surface. In addition, the first housing part 210 may include a third side surface 211b that is perpendicular to the first side surface 211a and has one end connected to the first side surface 211a and the other end connected to the hinge structure 230, and a fourth side surface 211c that is perpendicular to the first side surface 211a, has one end connected to the first side surface 211a and the other end connected to the hinge structure 230, and is spaced apart from the third side surface 211b in a direction parallel thereto. The second housing part 220 may include a fifth side surface 221b that is perpendicular to the second side surface 221a and has one end connected to the second side surface 221a and the other end connected to the hinge structure 230, and a sixth side surface 221c that is perpendicular to the second side surface 221a, has one end connected to the second side surface 221a and the other end connected to the hinge structure 230, and is spaced apart from the fifth side surface 221b in a direction parallel thereto. When the second housing part 220 is folded relative to the first housing part 210 about the hinge structure 230, the first side surface 211a may come closer to the second side surface 221a. When the second housing part 220 is unfolded relative to the first housing part 210 about the hinge structure 230, the first side surface 211a and the second side surface 221a may move away from each other.

According to an embodiment, in a fully folded state, the first front surface and the second front surface of the electronic device 101 may face each other, and in a fully unfolded state, the second direction may be the same as the first direction. In the fully unfolded state, the distance between the first side surface 211a and the second side surface 221a may be the greatest.

According to an embodiment, the first housing part 210 and the second housing part 220 may be disposed on opposite sides of a folding axis A, and may have an overall shape that is symmetrical with respect to the folding axis A. As will be described later, the first housing part 210 and the second housing part 220 may form an angle or a distance therebetween, which may be vary depending on whether the electronic device 101 is in the unfolded state, in the folded state, or in the intermediate state in which the electronic device 101 is partially unfolded (or partially folded).

According to an embodiment, as illustrated in FIG. 2, the first housing part 210 and the second housing part 220 may define together a recess that accommodates the display 250 therein. According to an embodiment, the first housing part 210 and the second housing part 220 may be at least partially made of a metal or non-metal material having rigidity in a level selected in order to support the display 250. At least the portion made of the metal material may provide a ground plane of the electronic device 101, and may be electrically connected to a ground line provided on a printed circuit board disposed inside the foldable housing 201.

According to an embodiment, the first rear plate 215 is disposed on one side of the folding axis A at the rear of the electronic device 101 and may have, for example, a substantially rectangular periphery, which may be surrounded by the first housing part 210. Similarly, the second rear plate 225 is disposed on the other side of the folding axis A on the rear surface of the electronic device 101, and its periphery may be surrounded by the second housing part 220.

According to an embodiment, the first rear plate 215 and the second rear plate 225 may have substantially symmetrical shapes with respect to the folding axis A. However, the first rear plate 215 and the second rear plate 225 do not necessarily have symmetrical shapes. According to an embodiment, the electronic device 101 may include the first rear plate 215 and the second rear plate 225 having various shapes. According to an embodiment, the first rear plate 215 may be configured integrally with the first housing part 210, and the second rear plate 225 may be configured integrally with the second housing part 220.

According to an embodiment, the first rear plate 215, the second rear plate 225, the first housing part 210, and the second housing part 220 may define a space in which various components (e.g., a printed circuit board or a battery) of the electronic device 101 may be disposed. According to an embodiment, one or more components may be disposed or visually exposed on the rear side of the electronic device 101. For example, at least a portion of a sub-display may be visually exposed through a first rear region 216 of the first rear plate 215. According to an embodiment, one or more components or sensors may be visually exposed through a second rear region 226 of the second rear plate 225. In various embodiments, the sensor may include a proximity sensor and/or a rear camera.

According to an embodiment, a front camera exposed on the front surface (e.g., the second front surface) of the electronic device 101 or a rear camera exposed through the second rear region 226 of the second rear plate 225 may include one or more lenses, an image sensor, and/or an image signal processor. The flash may include, for example, a light-emitting diode or a xenon lamp. In some embodiments, two or more lenses (e.g., an infrared camera, a wide-angle lens, and a telephoto lens), and image sensors may be arranged on one side surface of the electronic device 101.

Referring to FIG. 3, the hinge cover may be configured to cover internal components (e.g., the hinge structure 230) by being disposed between the first housing part 210 and the second housing part 220. According to an embodiment, the hinge structure 230 may be covered by a portion of the first housing part 210 and a portion of the second housing part 220, or may be exposed outside depending on the state of the electronic device 101 (the unfolded state, the intermediate state, or the folded state).

According to an embodiment, as illustrated in FIG. 2, when the electronic device 101 is in the unfolded state (e.g., the fully unfolded state), the hinge structure 230 may not be exposed by being covered by the first housing part 210 and the second housing part 220. According to an embodiment, as illustrated in FIG. 3, when the electronic device 101 is in the folded state (e.g., the fully folded state), the hinge structure 230 may be exposed to the outside between the first housing part 210 and the second housing part 220. According to an embodiment, when the first housing part 210 and the second housing part 220 are in the intermediate state in which the first and second housings are folded with a certain angle therebetween, the hinge structure 230 may be partially exposed to the outside between the first housing part 210 and the second housing part 220. However, the region exposed in this case may be smaller than that in the fully folded state. In an embodiment, the hinge structure 230 may include a curved surface.

According to an embodiment, the display 250 may be disposed in the space defined by the foldable housing 201. For example, the display 250 may be seated in the recess defined by the foldable housing 201 and may be externally visible through the front surface (e.g., the first front surface and/or the second front surface) of the electronic device 101. For example, the display 250 may constitute most of the front surface (e.g., the first front surface and/or the second front surface) of the electronic device 101. Therefore, the front surface (e.g., the first front surface and/or the second front surface) of the electronic device 101 may include the display 250 and a portion of the first housing part 210 and a portion of the second housing part 220 adjacent to the flexible display 250. In addition, the rear surface (e.g., the first rear surface and/or the second rear surface) of the electronic device 101 may include the first rear plate 215, a portion of the first housing 210 adjacent to the first rear plate 215, the second rear plate 225, and a portion of the second housing part 220 adjacent to the second rear plate 225.

According to an embodiment, the display 250 may refer to a display, at least a portion of which is transformable into a planar surface or a curved surface. According to an embodiment, the display 250 may include a folding region 253, a first region 251 disposed on one side of the folding region 253 (e.g., the left side of the folding region 253 illustrated in FIG. 2), and a second region 252 disposed on the other side of the folding region 253 (e.g., the right side of the folding region 203 illustrated in FIG. 2).

However, the region division of the display 250 illustrated in FIG. 2 is exemplary, and the display 250 may be divided into multiple (e.g., four or more or two) regions depending on the structures or functions thereof. For example, in the embodiment illustrated in FIG. 2, regions of the display 250 may be defined by a folding region 253 that extends in parallel with the folding axis A. According to an embodiment, the display 250 may have its regions defined based on another folding axis (e.g., a folding axis parallel to the width direction of the electronic device).

According to an embodiment of the disclosure, the display 250 may be coupled to or disposed adjacent to a touch panel equipped with a touch detection circuit and a pressure sensor capable of measuring the intensity (pressure) of a touch. For example, as an example of a touch panel, the display 250 may be coupled to or disposed adjacent to a touch panel that detects an electromagnetic resonance (EMR)-type stylus pen.

According to an embodiment, the first region 251 and the second region 252 may have generally symmetrical shapes about the folding region 253.

Hereinafter, the operations of the first housing part 210 and the second housing part 220 and respective areas of the display 250 according to the state of the electronic device 101 (e.g., the unfolded state, the folded state, or the intermediate state) will be described.

According to an embodiment, when the electronic device 101 is in the unfolded state (e.g., FIG. 2), the first housing part 210 and the second housing part 220 may be arranged to form an angle of 180 degrees therebetween and to be oriented in the same direction. The surface of the first region 251 and the surface of the second region 252 of the display 250 may form an angle of 180 degrees relative to each other and may be oriented in the same direction (e.g., the forward direction of the electronic device). In this case, the folding region 253 may define the same plane as the first region 251 and the second region 252.

According to an embodiment, when the electronic device 101 is in the folded state (e.g., FIG. 3), the first housing part 210 and the second housing part 220 may be disposed to face each other. The surface of the first region 251 and the surface of the second region 252 of the display 250 form a narrow angle (e.g., between 0 degrees and 10 degrees) and may face each other. At least a portion of the folding region 253 may be provided as a curved surface with a predetermined curvature.

According to an embodiment, when the electronic device 101 is in the intermediate state (not illustrated), the first housing part 210 and the second housing part 220 may be disposed to form a certain angle therebetween. The surface of the first region 251 and the surface of the second region 252 of the display 250 may form an angle greater than that in the folded state and smaller than that in the unfolded state. At least a portion of the folding region 253 may form a curved surface with a predetermined curvature, and the curvature in this case may be smaller than that in the folded state.

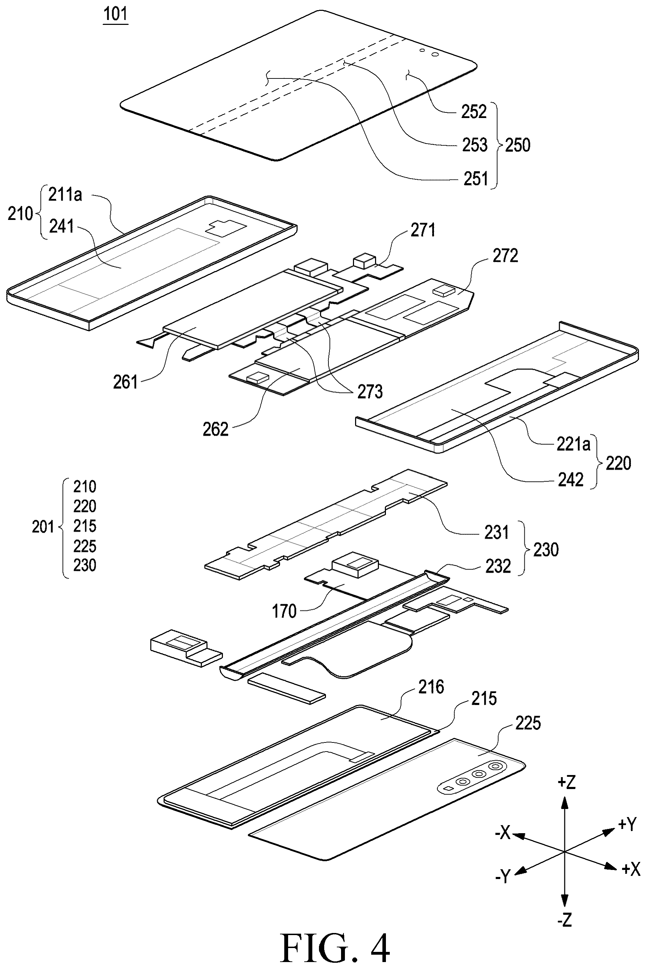

FIG. 4 is an exploded perspective view of an electronic device 101 according to an embodiment of the disclosure.

In FIG. 4 and subsequent drawings, a spatial coordinate system defined by the X axis, the Y axis, and the Z axis orthogonal to each other is illustrated. Here, the X axis may represent a width direction of the electronic device, the Y axis may represent a length direction of the electronic device, and the Z axis may represent a height (or thickness) direction of the electronic device. In describing various embodiments of the disclosure, "first direction" and "second direction" may refer to directions parallel to the Z-axis.

In describing components of the electronic device 101 illustrated in FIG. 4, redundant descriptions of components previously described with reference to FIGS. 2 and 3 will be omitted.

According to an embodiment of the disclosure, the electronic device 101 may include various electronic components disposed in internal or external spaces of the first housing part 210 and the second housing part 220. Various electronic components include, for example, a processor (e.g., the processor 120 in FIG. 1), memory (e.g., the memory 130 in FIG. 1), an input module (e.g., the input module 150 in FIG. 1), a sound output module (e.g., the sound output module 155 in FIG. 1), a display 250 (e.g., the display module 160 in FIG. 1), an audio module (e.g., the audio module 170 in FIG. 1), a sensor (e.g., the sensor module 176 in FIG. 1), an interface (e.g., the interface 177 in FIG. 1), a connection terminal (e.g., the connection terminal 178 in FIG. 1), a haptic module (e.g., the haptic module 179 in FIG. 1), a camera module (e.g., the camera module 180 in FIG. 1), a power management module 188, batteries 261 and 262 (e.g., the battery 189 in FIG. 1), a communication module (e.g., the communication module 190 in FIG. 1), a subscriber identification module (e.g., the subscriber identification module 196 in FIG. 1), or an antenna module (e.g., the antenna module 197 in FIG. 1). The electronic components may be appropriately diffused and arranged in the inner or outer space of the first housing part 210 and the second housing part 220. At least one of these components (e.g., the connection terminal 178) may be omitted, or one or more other components may be added to the electronic device 101. In addition, some of these components may be integrated into a single component.

According to an embodiment, the electronic device 101 may be a foldable electronic device and may include multiple batteries to supply and store power required for driving the electronic components. For example, the electronic device 200 may include a first battery 261 and a second battery 262 disposed in the first housing part 210 and the second housing part 220, respectively.

According to an embodiment, the electronic device 101 may be a foldable electronic device and may include a plate 240 configured to arrange components thereon in each of the first housing part 210 and the second housing part 220. Various electronic components and/or printed circuit boards 271 and 272 may be disposed on the plate 240. According to an embodiment, the plate 240 may include a plurality of plates 241 and 242. For example, a first support structure 241 and a first printed circuit board 271 may be disposed in the first housing part 210, and a second support structure 242 and a second printed circuit board 272 may be disposed in the second housing part 220. The first support structure 241 may include a first surface 241a oriented in the first direction, and the second support structure 242 may include a second surface 242a oriented in the second direction. The first support structure 241 and the second support structure 242 may be folded or unfolded relative to each other by the hinge structure 230 configured to correspond to the folding region 253 of the flexible display 250. In the folded state, the first support structure 241 and the second support structure 242 may be configured to face each other, and in the unfolded state, the directions in which the first surface 241a and the second surface 242a are oriented may be the same. The hinge structure 230 may include a hinge plate 231 and/or a hinge cover 232, and the first support structure 241 and the second support structure 242 may be disposed on one side and the other side of the hinge plate 231 of the hinge structure 230.

Signals from a processor for implementing various functions and operations of the electronic device 101 may be transmitted to electronic components through various conductive lines formed on the printed circuit boards 271 and 272 and/or a connection member (connector) 273.

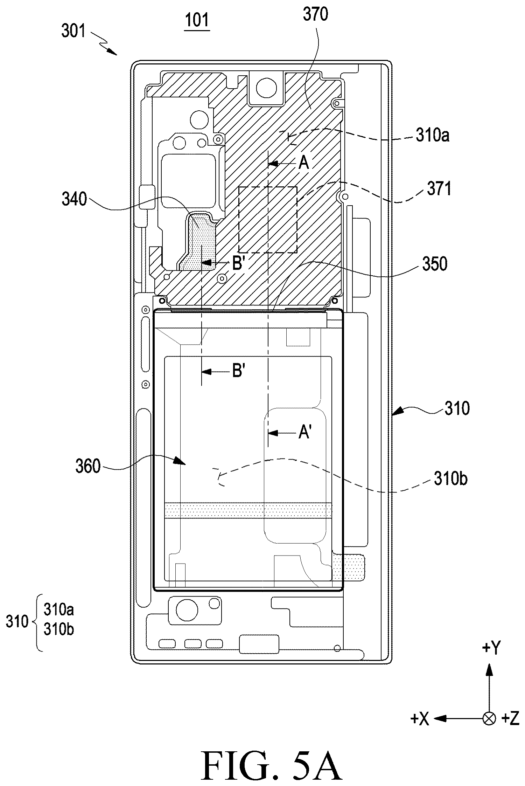

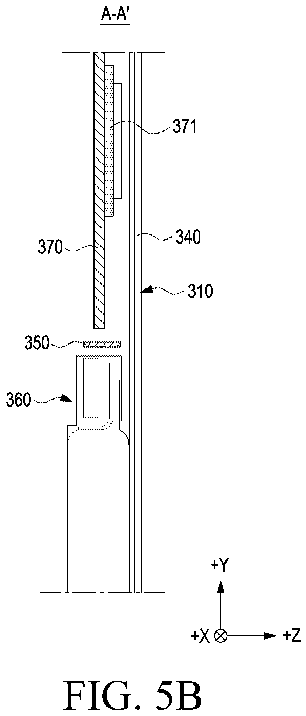

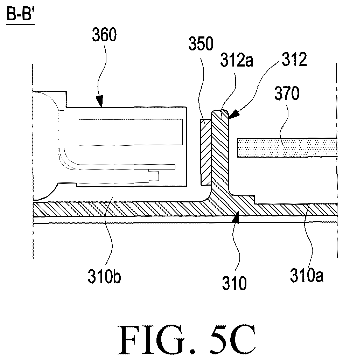

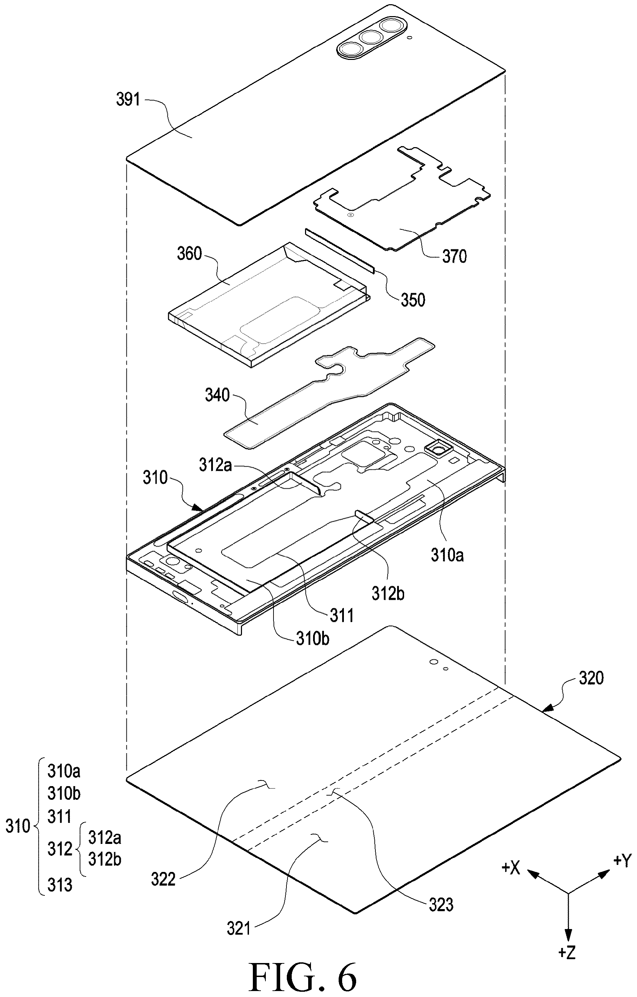

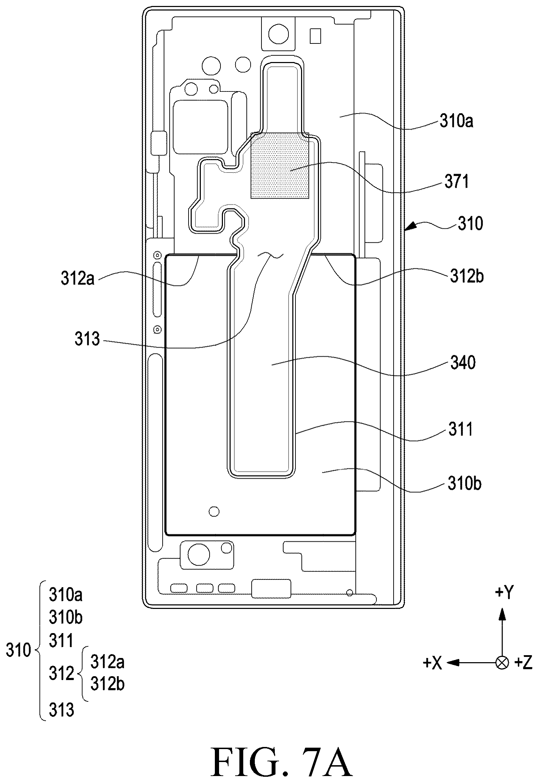

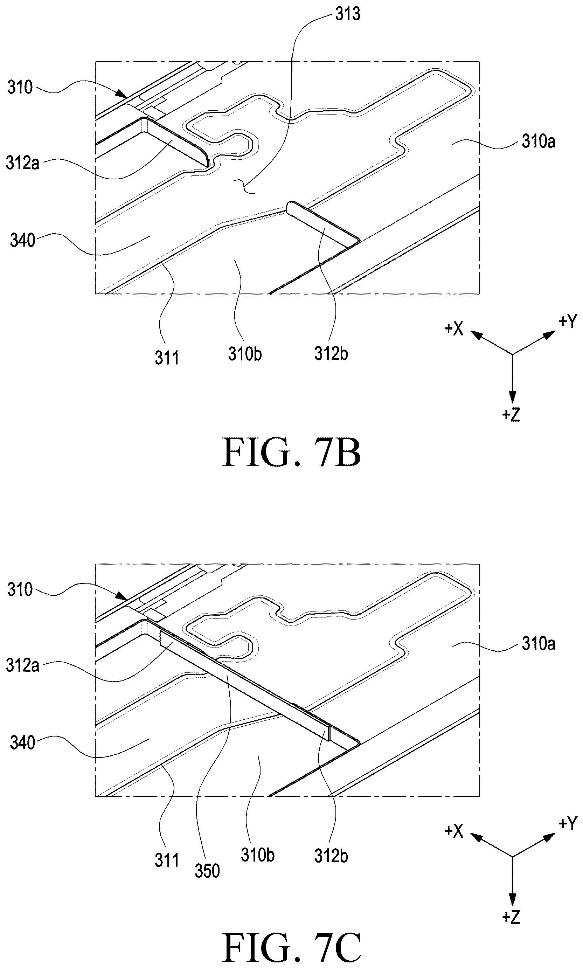

FIG. 5A is a rear view of the electronic device according to an embodiment of the disclosure. FIG. 5B is a cross-sectional side view taken along line A-A' of FIG. 5A, according to an embodiment of the disclosure. FIG. 5C is a cross-sectional side view taken along line B-B' of FIG. 5A, according to an embodiment of the disclosure. FIG. 6 is an exploded perspective view of the electronic device according to an embodiment. FIG. 7A is a rear view illustrating a support structure and a heat dissipation structure of an electronic device according to an embodiment of the disclosure. FIG. 7B is a view illustrating a support structure and a heat dissipation structure of an electronic device according to an embodiment of the disclosure. FIG. 7C is a perspective view illustrating a protection member disposed in the support structure of an electronic device according to an embodiment of the disclosure.

All or part of the configuration of the electronic device 101 in FIG. 5A may be the same as or similar to all or part of the configuration of the electronic device 101 in FIGS. 1 to 4.

FIG. 5A may illustrate a state in which a rear plate (e.g., the rear plate 215 in FIGS. 2, 3, and 4) is removed from the electronic device 101. Hereinafter, a housing part (or the second housing part) 301 of the electronic device 101 will be described by taking one of the first housing part 210 or the second housing part 220 illustrated in FIGS. 2 to 4 (e.g., the second housing part 220) as an example, and the internal structures (e.g., a partition wall 312, a heat dissipation member 340, and/or a protection member 350) disposed therein according to embodiments of the disclosure will be described. However, this is not limiting, and the descriptions of the internal structures may be equally or similarly applicable to the remaining housing (e.g., the first housing part 210) of the electronic device 101.

Referring to FIGS. 5A to 7C, in an embodiment, the electronic device 101 may include a housing part 301 (e.g., the housing 201 of FIG. 2), a flexible display 320 (e.g., the flexible display 250 of FIGS. 2 and 4), a battery 360 disposed inside the housing part 301 (e.g., the batteries 261 and 262 of FIG. 4), a circuit board 370, a heat dissipation member 340, and a protection member 350. According to an embodiment, the housing part 301 may include a support structure 310 and a rear plate 391 (e.g., the rear plate 225 of FIGS. 2 to 4) disposed to face the support structure 310. For example, in a space enclosed by the support structure 310 and the rear plate 391 of the housing part 301, other electrical/electronic components (e.g., a circuit board 370, a battery 360, a heat dissipation member 340, and/or a protection member 350) of the electronic device 101 may be disposed.

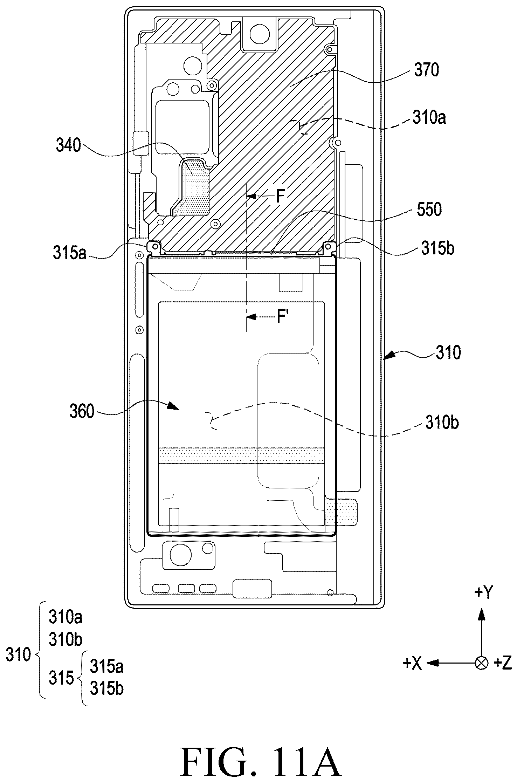

According to an embodiment, the support structure 310 may include a first region 310a and a second region 310b around the first region 310a. According to an embodiment, the support structure 310 may further include a partition wall 312 disposed between the first region 310a and the second region 310b. According to an embodiment, the partition wall 312 may include an opening 313 that interconnects the first region 310a and the second region 310b. However, according to an embodiment (e.g., FIGS. 11A to 12D), the partition wall 312 may be omitted from the support structure 310, and the first region 310a and the second region 310b may be structurally separated by the protection member 350 disposed to extend across the two regions.

According to an embodiment, a battery 360 (e.g., the batteries 261 and 262 of FIG. 4) may be disposed in the second region 310b of the support structure 310. Referring to FIG. 6, for example, the support structure 310 may include a depression or recess in which at least a portion of the battery 360 disposed in the second region 310b may be seated or accommodated. For example, the support structure 310 may include one or more partition walls facing side surfaces of the battery 360 (e.g., the side surface in the +X direction side, the side surface in the -X direction, and/or the side surface in the -Y direction) at a periphery of the second region 310b. Referring to FIG. 6, according to an embodiment, the support structure 310 may further include a seating portion 311 in which the heat dissipation member 340 is to be positioned, accommodated, and/or seated. For example, the seating portion 311 may be defined to at least partially correspond to the shape of the heat dissipation member 340. For example, the seating portion 311 may be formed from a portion of the first region 310a to a portion of the second region 310b. For example, the seating portion 311 may include a recess and/or a hole.

Referring to FIG. 6, in an embodiment, the flexible display 320 (e.g., the flexible display 250 of FIGS. 2 to 4) may be disposed in a housing (e.g., the housing 201 of FIGS. 2 to 4) including the housing part 301. For example, the flexible display 320 may include a first display region 321 disposed on the first housing part (e.g., the first housing part 210 of FIGS. 2 to 4), a second display region 322 disposed on the housing part (or the second housing part) illustrated in FIG. 6 (e.g., the second housing part 220 of FIGS. 2 to 4), and a folding region 323 disposed between the first display region 321 and the second display region 322. According to an embodiment, the heat dissipation member 340 may be disposed between the support structure 310 and a portion of the flexible display 320 (e.g., the second display region 322).

According to an embodiment, a circuit board 370 (e.g., the second printed circuit board 272) may be disposed in the first region 310a. According to an embodiment, the electronic device 101 may further include a heat source 371 disposed on the circuit board 370. For example, the heat source 371 may be an electrical/electronic component, such as a processor (e.g., the processor 120 of FIG. 1). For example, the circuit board 370 may be a main printed circuit board, and the heat source 371 may be a main processor (e.g., the main processor 121 of FIG. 1) (e.g., a central processing unit or an application processor). Referring to FIG. 5B, according to an embodiment, the heat source 371 may be disposed between the circuit board 370 and the support structure 310. In other words, the heat source may be disposed on one surface of the circuit board 370 that faces the support structure 310 (e.g., the surface oriented in the +Z direction).

Referring to FIG. 5B and FIGS. 7A to 7C, according to an embodiment, the heat dissipation member 340 may be disposed from a portion of the first region 310a of the support structure 310, through the opening 313 of the partition wall 312, to a portion of the second region 310b. According to an embodiment, at least a portion of the heat dissipation member 340 may be disposed to face the heat source 371 disposed on the circuit board 370. For example, the heat dissipation member 340 may be in at least partial contact with the heat source 371. According to an embodiment, the heat dissipation member 340 may be configured to transfer heat delivered from the heat source 371 to the battery 360. Referring to FIG. 5B, according to an embodiment, a portion or one end of the heat dissipation member 340 may be disposed between the support structure 310 and the circuit board 370. For example, a portion or one end of the heat dissipation member 340 may be disposed between the heat source 371 disposed on the circuit board 370 and the support structure 310.

Referring to FIGS. 5A to 5C, 7B, and 7C, according to an embodiment, the protection member 350 may be disposed to block at least a portion of the opening 313 of the partition wall 312 of the support structure 310. According to an embodiment, the protection member 350 may include a portion disposed between the battery 360 and the partition wall 312, and a portion disposed between the battery 360 and the opening 313. According to an embodiment, the protection member 350 may be disposed on the side of the second region 310b with respect to the partition wall 312 (e.g., the first rib 312a and/or the second rib 312b). Referring to FIG. 5C, according to an embodiment, the protection member 350 may be disposed on all or a portion of one surface (e.g., the surface in the -Y direction) of the partition wall 312 (e.g., the first rib 312a and/or the second rib 312b). Referring to FIGS. 5B and 5C, according to an embodiment, the protection member 350 may be disposed to face one side surface (e.g., the surface in the +Y direction) of the battery 360 and may be spaced apart from the one side surface (e.g., the surface in the +Y direction) of the battery 360. For example, the protection member 350 may be spaced apart from the circuit board 370.

According to an embodiment, the protection member 350 may be disposed such that the battery 360 does not come into direct contact with end edges of the first rib 312a and the second rib 312b of the partition wall 312, thereby preventing or reducing damage to the battery 360 that may occur due to direct contact with the end edges of the first rib 312a and the second rib 312b. According to an embodiment, the protection member 350 may limit movement or displacement of the battery 360 toward the first region 310a of the support structure 310. According to an embodiment, the protection member 350 (e.g., the buffer portion 351) may serve to protect the battery 360 by absorbing impact transmitted to the battery 360 when external impact is applied to the electronic device 101. For example, the protection member 350 may prevent damage to the battery 360 and prevent ignition phenomenon resulting from breakage of the battery 360 by absorbing at least a portion of the impact transmitted from the battery 360 when the battery 360 is displaced toward the first region 310a of the support structure 310. The protection member 350 and the partition wall 312 may also prevent the heat accumulated in the battery from spreading in an uncontrolled way.

Referring to FIG. 5B, according to an embodiment, the protection member 350 may be disposed to face the surface or bottom surface (e.g., the surface in the -Z direction) of the support structure 310 with a gap therebetween. According to an embodiment, the protection member 350 may be spaced apart from the surface or bottom surface (e.g., the surface in the -Z direction) of the support structure 310 by being coupled to the partition wall 312 (e.g., the first rib 312a and the second rib 312b). Referring to FIGS. 5B and 7C, according to an embodiment, the heat dissipation member 340 may be disposed to pass through a gap between the protection member 350 and the surface of the support structure 310. For example, the height of the gap between the protection member 350 and the surface of the support structure 310 (e.g., the height in the Z-axis direction) may be greater than the thickness of the heat dissipation member 340 (e.g., the thickness in the Z-axis direction). According to an embodiment of the disclosure, the protection member 350 may be disposed to limit movement of the battery 360 and protect the battery 360 from external impact, while forming a gap with the support structure 310 through which the heat dissipation member 340 can pass. As a result, since the heat dissipation member 340 is disposed across the first region 310a and the second region 310b of the support structure 310, and transfers heat from the heat source 371 to the battery 360, which has a relatively large heat capacity, the overall heat dissipation performance of the electronic device 101 may be improved.

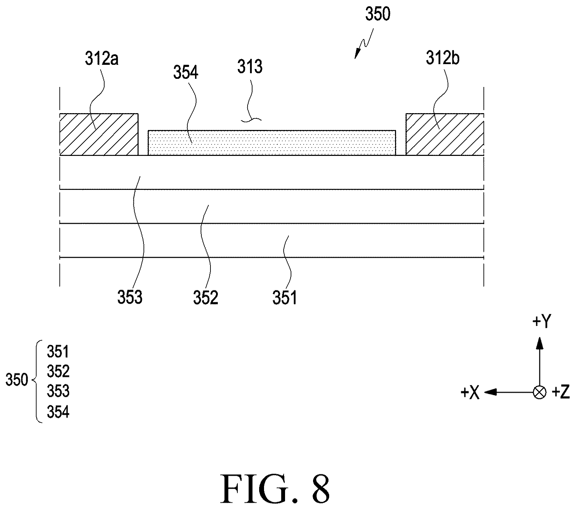

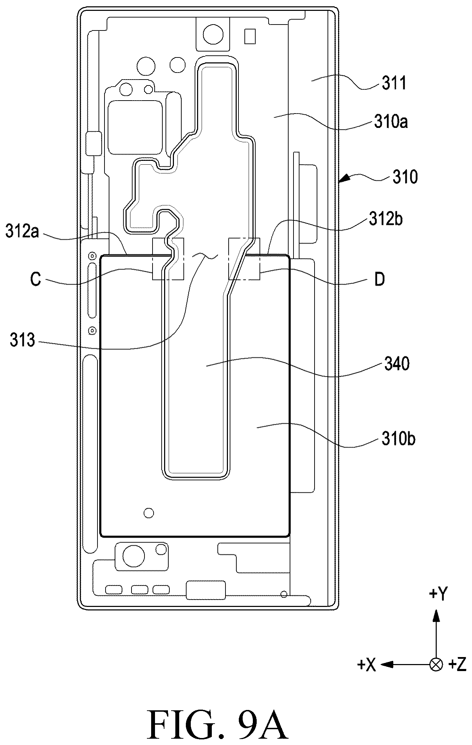

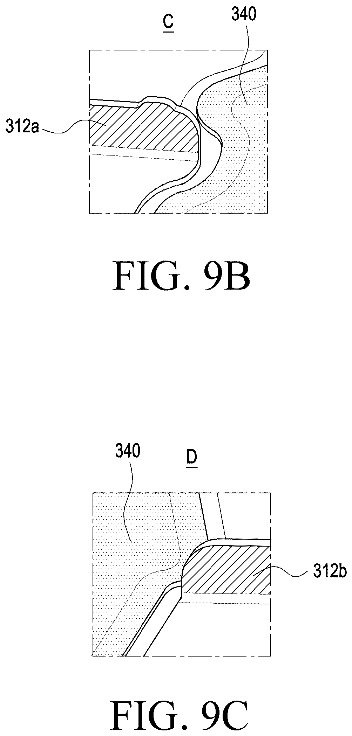

FIG. 8 is a cross-sectional view illustrated a stacked structure of a protection member 350 of an electronic device according to an embodiment of the disclosure. FIG. 9A is a rear view illustrating a support structure and a heat dissipation structure of an electronic device according to an embodiment of the disclosure. FIG. 9B is an enlarged view of portion C of FIG. 9A according to an embodiment of the disclosure. FIG. 9C is an enlarged view of portion D of FIG. 9A according to an embodiment of the disclosure.

The first rib 312a, the second rib 312b, and the protection member 350 in the embodiment of FIG. 8 may correspond to the first rib 312a, the second rib 312b, and the protection member 350 in FIGS. 5A to 7C. The support structure 310 and the heat dissipation member 340 in the embodiment of FIGS. 9A to 9C may correspond to the support structure 310 and the heat dissipation member 340 in FIGS. 5A to 8.

Referring to FIG. 8, according to an embodiment, the protection member 350 may include a buffer portion 351, a support portion 352, an adhesive layer 353, and/or a non-adhesive portion 354.

According to an embodiment, the buffer portion 351 may be configured to be elastically deformable. According to an embodiment, the buffer portion 351 may be disposed to face the battery 360, and for example, may be disposed to face a side surface of the battery 360 oriented toward the first region 310a (e.g., the side surface in the +Y direction side or the upper surface). According to an embodiment, by being disposed in the protection member 350 closest to the battery 360 and in direct contact with the battery 360 when the battery 360 moves, the buffer portion 351 may serve to mitigate the impact transmitted to the battery 360 to protect the battery 360 when an external impact is applied to the electronic device 101. For example, the damper portion 351 may prevent damage to the battery 360 and prevent ignition resulting from breakage of the battery 360 by absorbing at least a portion of the impact transmitted from the battery 360 when the battery 360 moves toward the first region 310a of the support structure 310.

According to an embodiment, the support portion 352 may have relatively greater strength than the remaining portions (e.g., the buffer portion 351) of the protection member 350. For example, the support portion 352 may have greater strength than the buffer portion 351, the adhesive layer 353, and/or the non-adhesive portion 354. For example, the support portion 352 may contain a synthetic resin (e.g., polycarbonate (PC) or polyethylene terephthalate (PET)) and may be, for example, a sheet-type member. For example, the support portion 352 may serve as a rigid body to prevent damage to the protection member 350, or movement (e.g., shifting) or detachment of the protection member 350 due to deformation of the protection member 350 or movement of the battery 360.

According to an embodiment, the adhesive layer 353 (or bonding layer, adhesive member) may bond the protection member 350 to all or part of the partition wall 312 (e.g., the first rib 312a and/or the second rib 312b). According to an embodiment, the adhesive layer 353 (e.g., a double-sided tape) may at least partially have adhesiveness on both surfaces (e.g., surfaces in the Y-axis direction). For example, a non-adhesive portion 354 may be bonded to a portion of one surface (e.g., the surface in the +Y direction) of the adhesive layer 353, and the remaining portion of the one surface may be bonded or attached to the surface (e.g., the surface in the -Y direction) of the first rib 312a and/or the second rib 312b facing the battery 360. For example, the support portion 352 may be disposed on the other surface (e.g., the surface in the -Y direction) of the adhesive layer 353.

According to an embodiment, all or part of the non-adhesive portion 354 may be disposed in the opening 313 of the partition wall 312. For example, the non-adhesive portion 354 may be disposed on one surface of the adhesive layer 353. According to an embodiment, the non-adhesive portion 354 may be attached to a portion exposed through the opening 313 between portions attached to the first rib 312a and/or the second rib 312b on one surface (e.g., the surface in the +Y direction) of the adhesive layer 353 having adhesiveness. For example, the non-adhesive portion 354 may enclose a portion of one surface (e.g., the surface in the +Y direction) of the adhesive layer 353 that is exposed through the opening 313, thereby preventing or reducing contamination due to the adhesiveness of that portion or damage to other structures or electrical/electronic components therearound.

Referring to FIGS. 9B and 9C, according to an embodiment, the first rib 312a of the support structure 310 may include a curved surface at its end facing the second rib 312b. For example, end edges of the first rib 312a facing the second rib 312b, which may come into contact with the battery 360 when the battery 360 moves, may all be processed or formed as curved surfaces. According to an embodiment, the second rib 312b of the support structure 310 may include a curved surface at its end facing the first rib 312a. For example, end edges of the second rib 312b facing the first rib 312a, which may come into contact with the battery 360 when the battery 360 moves, may all be processed or formed as curved surfaces. For example, by forming the end edges of the first rib 312a and the second rib 312b that face each other to include curved surfaces, damage that may occur to the battery 360 due to contact with those edges may be reduced or prevented.

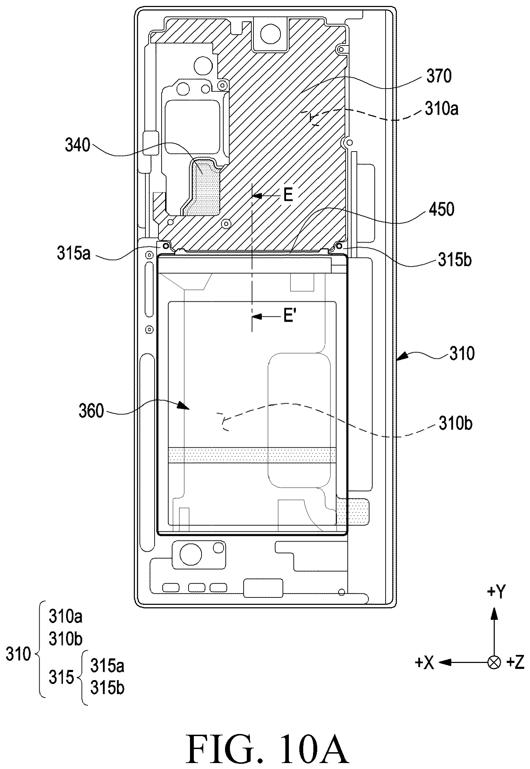

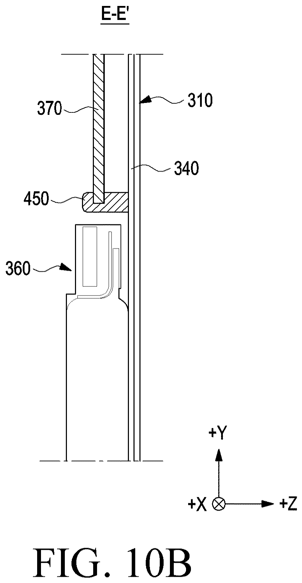

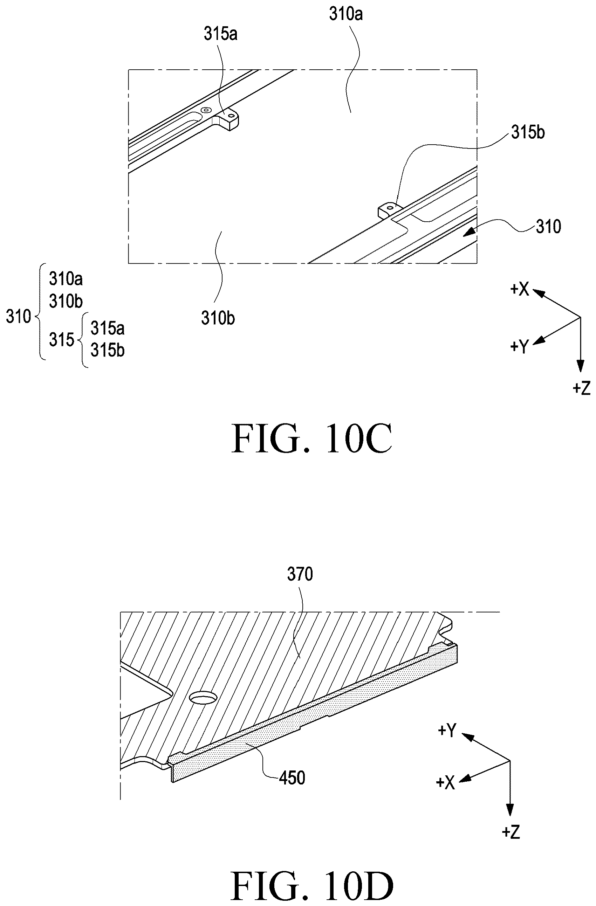

FIG. 10A is a rear view of an electronic device according to an embodiment of the disclosure. FIG. 10B is a side cross-sectional view taken along line E-E' of FIG. 10A according to an embodiment of the disclosure. FIG. 10C is a perspective view illustrating a support structure according to an embodiment of the disclosure. FIG. 10D is a perspective view illustrating a protection member according to an embodiment of the disclosure.

The support structure 310, the battery 360, the circuit board 370, and the heat dissipation member 340 in the embodiment of FIGS. 10A to 10D may be referred to as the support structure 310, the battery 360, the circuit board 370, and the heat dissipation member 340 in the embodiment of FIGS. 5A to 9C. Descriptions previously provided with reference to the embodiments of FIGS. 5A to 9C for components assigned the same reference numerals may be omitted below.

Referring to FIG. 10C, according to an embodiment, the support structure 310 may include a first region 310a and a second region 310b surrounding the first region 310a. According to an embodiment, the first region 310a and the second region 310b may be structurally separated by a protection member 350 disposed to extend across therebetween. According to an embodiment, the protection member 450 may be disposed to face one side surface (e.g., the surface in the +Y direction) of the battery 360 and may be spaced apart from the one side surface (e.g., the surface in the +Y direction) of the battery 360. Referring to FIG. 10C, according to an embodiment, the support structure 310 may include a coupling portion 315 disposed between the first region 310a and the second region 310b to support the protection member 450. According to an embodiment, the coupling portion 315 may include a first coupling portion 315a and a second coupling portion 315b, which are configured to be coupled to respective ends of the protection member 450 in the longitudinal direction (e.g., the X-axis direction). For example, the first coupling portion 315a and the second coupling portion 315b may be formed to protrude from edge regions of the support structure 310 toward a central portion of the support structure 310 or toward the protection member 450. According to an embodiment, the coupling portion 315 may be omitted, and the protection member 450 may be coupled only to the circuit board 370.

According to an embodiment, the protection member 450 may be coupled to a first edge (e.g., the edge in the -Y direction) of the circuit board 370 that faces the battery 360. According to an embodiment, the protection member 450 may include a structure that is engaged with the first edge (e.g., the edge in the -Y direction) of the circuit board 370 that faces the battery 360, and may include, for example, a structure that at least partially encloses the first edge. According to an embodiment, the protection member 450 may contain a non-conductive material (e.g., synthetic resin). For example, the protection member 450 may be formed through injection molding.

Referring to FIG. 10B, according to an embodiment, the protection member 450 may be disposed to face the surface or bottom surface (e.g., the surface in the -Z direction) of the support structure 310 with a gap therebetween. According to an embodiment, the protection member 450 may be spaced apart from the surface of the support structure 310 by being coupled to the first edge (e.g., the edge in the -Y direction) of the circuit board 370 that faces the battery 360. According to an embodiment, the heat dissipation member 340 may be disposed to pass through the gap between the protection member 450 and the surface of the support structure 310. For example, the height of the gap between the protection member 450 and the surface of the support structure 310 (e.g., the height in the Z-axis direction) may be greater than the thickness of the heat dissipation member 340 (e.g., the thickness in the Z-axis direction).

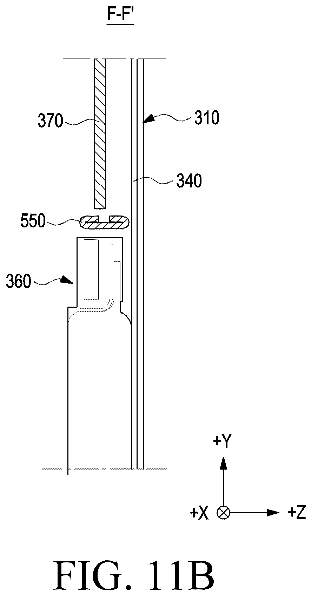

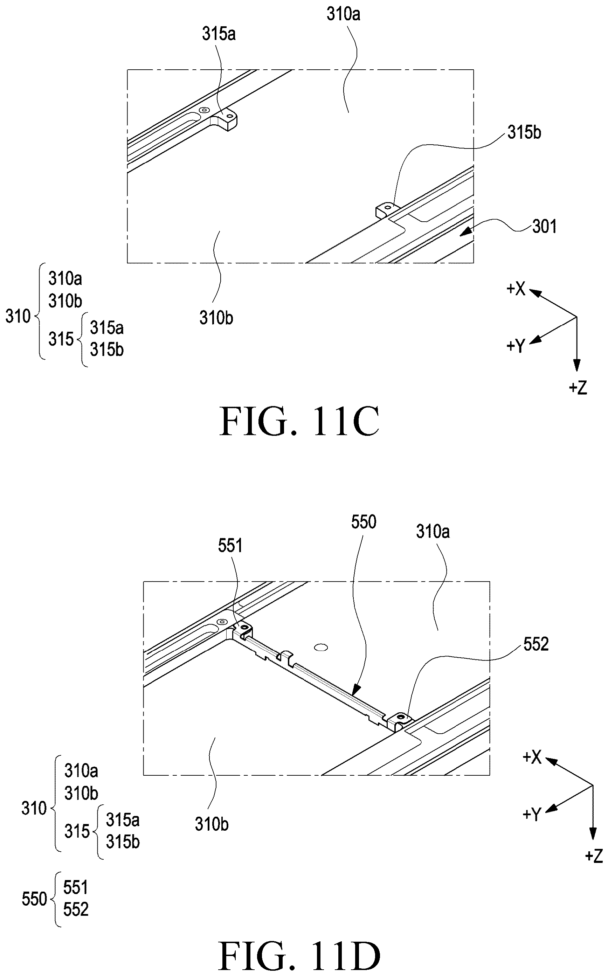

FIG. 11A is a rear view of an electronic device according to an embodiment of the disclosure. FIG. 11B is a side cross-sectional view taken along line F-F' of FIG. 11A according to an embodiment of the disclosure. FIG. 11C is a perspective view illustrating a support structure according to an embodiment of the disclosure. FIG. 11D is a perspective view illustrating a protection member according to an embodiment of the disclosure.

The support structure 310, the battery 360, the circuit board 370, and the heat dissipation member 340 in the embodiment of FIGS. 11A to 11D may referred to as the support structure 310, the battery 360, the circuit board 370, and the heat dissipation member 340 in the embodiment of FIGS. 5A to 9C. Descriptions previously provided with reference to the embodiments of FIGS. 5A to 9C for components assigned the same reference numerals may be omitted below.

Referring to FIGS. 11C and 11D, according to an embodiment, the support structure 310 may include a first region 310a and a second region 310b surrounding the first region 310a. According to an embodiment, the first region 310a and the second region 310b may be structurally separated by a protection member 350 disposed to extend across therebetween. Referring to FIG. 11C, according to an embodiment, the support structure 310 may include a coupling portion 315 disposed between the first region 310a and the second region 310b to support the protection member 550. According to an embodiment, the coupling portion 315 may include a first coupling portion 315a and a second coupling portion 315b, which are configured to be coupled to respective ends of the protection member 550 in the longitudinal direction (e.g., the X-axis direction). For example, the first coupling portion 315a and the second coupling portion 315b may be formed to protrude from edge regions of the support structure 310 toward a central portion of the support structure 310 or toward the protection member 550. According to an embodiment, the shape of the coupling portion 315 is not limited, as long as it allows opposite ends of the protection member 550 in the longitudinal direction (e.g., the X-axis direction) to be coupled and supported.

According to an embodiment, the protection member 550 may be disposed to face one side surface (e.g., the surface in the +Y direction) of the battery 360 and may be spaced apart from the one side surface (e.g., the surface in the +Y direction) of the battery 360. For example, the protection member 550 may be spaced apart from the circuit board 370.

According to an embodiment, the protection member 550 may be disposed to extend across the space between the first region 310a and the second region 310b in the width direction of the support structure 310 (e.g., the X-axis direction). According to an embodiment, both ends (e.g., ends in the X-axis direction) of the protection member 550 may be coupled to the support structure 310. According to an embodiment, the protection member 550 may contain a conductive material (e.g., metal). For example, the protection member may contain a metal such as stainless steel. For example, referring to FIG. 12B, the cross-section of the protection member 550 in the width direction may have a C-shaped or 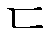 -shaped profile. For example, the protection member 550 may be manufactured by bending a metal plate member.

Referring to FIG. 11B, according to an embodiment, the protection member 550 may be disposed to face the surface or bottom surface (e.g., the surface in the -Z direction) of the support structure 310 with a gap therebetween. According to an embodiment, the protection member 550 may be coupled, at the longitudinal ends (e.g., ends in the X-axis direction) thereof, to a portion of the support structure 310 to be spaced apart from the surface of the support structure 310. According to an embodiment, the heat dissipation member 340 may be disposed to pass through the gap between the protection member 550 and the surface of the support structure 310. For example, the height of the gap between the protection member 550 and the surface of the support structure 310 (e.g., the height in the Z-axis direction) may be greater than the thickness of the heat dissipation member 340 (e.g., the thickness in the Z-axis direction).

According to an embodiment, the protection member 450 or 550 may limit movement or displacement of the battery 360 toward the first region 310a of the support structure 310. According to an embodiment, the protection member 450 or 550 may serve to protect the battery 360 by absorbing impact transmitted to the battery 360 when external impact is applied to the electronic device 101. For example, the protection member 450 or 550 may prevent damage to the battery 360 and prevent ignition phenomenon resulting from breakage of the battery 360 by absorbing at least a portion of the impact transmitted from the battery 360 when the battery 360 is displaced toward the first region 310a of the support structure 310.

According to an embodiment of FIGS. 10A to 11D, the protection member 450 or 550 may be disposed to limit movement of the battery 360 and protect the battery 360 from external impact, while forming a gap with the support structure 310 through which the heat dissipation member 340 can pass. As a result, since the heat dissipation member 340 is disposed across the first region 310a and the second region 310b of the support structure 310, and transfers heat from the heat source 371 to the battery 360, which has a relatively large heat capacity, the overall heat dissipation performance of the electronic device 101 may be improved.

The aspects of the disclosure are intended to solve at least the aforementioned problems and/or disadvantages and to provide at least the following advantages. However, the problems that the disclosure seeks to solve are not limited to the aforementioned problems, and may be expanded in various ways without departing from the spirit and scope of the disclosure.

According to an embodiment of the disclosure, the protection member 350, 450, or 550 may be disposed to limit movement of the battery 360 and protect the battery 360 from external impact, while forming a gap with the support structure 310 through which the heat dissipation member 340 can pass. As a result, since the heat dissipation member 340 is disposed across the entire region (e.g., the first region 310a and the second region 310b) of the support structure 310, and transfers heat from the heat source 371 to the battery 360, which has a relatively large heat capacity, the overall heat dissipation performance of the electronic device 101 may be improved.

The effects that may be obtained from the disclosure are not limited to the effects mentioned above, and various effects that are directly or indirectly identified through this document may be provided.

The support structure, heat dissipation member, and protection member of the disclosure described above, as well as the electronic device including the same, are not limited to the foregoing embodiments and drawings, and it will be apparent to those ordinarily skilled in the art that various substitutions, modifications, and changes may be made without departing from the technical scope of the disclosure.

Although the disclosure has been described with reference to an embodiment as an example, it is to be understood that the embodiment is intended to be exemplary and is not limiting the disclosure. It will be apparent to those skilled in the art that various changes in form and detail may be made without departing from the overall scope of the disclosure, including the appended claims and their equivalents.

An embodiment of the disclosure provides an electronic device 101. The electronic device includes a housing 201 forming a portion of an exterior of the electronic device and including a support structure 310 and a rear plate 215 or 390, wherein the support structure includes a first region 310a, a second region 310b, and a partition wall 312 disposed between the first region and the second region, and the partition wall including an opening 313, a battery 360 disposed between the second region of the support structure and the rear plate, a protection member 350 disposed to block at least a portion of the opening, and a heat dissipation member 340 disposed from a portion of the first region through the opening to a portion of the second region, a portion of the heat dissipation member disposed between the second region and the battery.

According to an embodiment, the housing may include a first housing part 210, and a second housing part 220 or 301 rotatably connected to the first housing part, the second housing part including the support structure and the rear plate. The electronic device may further include a flexible display 250 or 320 disposed at the housing, and the support structure may be disposed between a portion of the flexible display and the heat dissipation member.

According to an embodiment, the protection member may be disposed to face a surface of the support structure with a gap therebetween, and the heat dissipation member may be disposed to pass through the gap between the protection member and the surface of the support structure.

According to an embodiment, the protection member may include a buffer portion 351 which is disposed to face one side surface of the battery and configured to be elastically deformable.

According to an embodiment, the protection member may further include a support portion 352 having a strength greater than the buffer portion and disposed to face the one side surface of the battery with the buffer portion interposed therebetween.

According to an embodiment, the protection member may include a non-adhesive portion 354 at least partially disposed in the opening.

According to an embodiment, the protection member may further include an adhesive layer 353 coupled to a portion of the partition wall, and the non-adhesive portion may be disposed on one surface of the adhesive layer.

According to an embodiment, the protection member may be disposed to face the one side surface of the battery while being spaced apart from one side surface of the battery.

According to an embodiment, the partition wall may include a first rib 312a and a second rib 312b disposed to face each other with the opening interposed therebetween, and a portion of the protection member is disposed on at least one of the first rib or the second rib.

According to an embodiment, the first rib may include a curved surface at an end facing the second rib, and the second rib may include a curved surface at an end facing the first rib.

According to an embodiment, the electronic device may further include a circuit board disposed on the first region, and a heat source 371 disposed on the circuit board.

According to an embodiment, at least a portion of the heat dissipation member may be disposed to face the heat source and may be configured to transfer heat emitted from the heat source to the battery.

According to an embodiment, a portion of the heat dissipation member may be disposed between the support structure and the circuit board, and the heat source may be disposed between the heat dissipation member and the circuit board.

An embodiment of the disclosure may provide an electronic device 101. The electronic device may include a housing 301 including a support structure 310 and a rear plate 215 disposed to face the support structure, the support structure including a first region 310a and a second region 310b spaced apart from the first region, a battery 360 disposed between the second region of the support structure and the rear plate, a protection member 450 or 550 disposed from a portion of the first region, through the protection member, to a portion of the second region. A portion of protection member 450 or 550 disposed between the first region and the second region

According to an embodiment, the protection member may be disposed to face a surface of the support structure with a gap therebetween, and the heat dissipation member may be disposed to pass through the gap.

According to an embodiment, the protection member may be disposed to face the one side surface of the battery while being spaced apart from one side surface of the battery.

According to an embodiment, the electronic device may further include a circuit board disposed on the first region, and a heat source disposed on the circuit board. At least a portion of the heat dissipation member may be disposed to face the heat source and may be configured to transfer heat emitted from the heat source to the battery.

According to an embodiment, the protection member may include a structure that is engaged with a first edge of the circuit board to be coupled to the first edge facing the battery.

According to an embodiment, the protection member may contain a non-conductive material.

According to an embodiment, the protection member may be disposed to extend across a space between the first region and the second region in a width direction of the support structure, and opposite ends of the protection member may be coupled to the support structure.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a housing (301) forming a portion of an exterior of the electronic device and including a support structure (310) and a rear plate (215; 390), wherein the support structure (310) includes a first region (310a), a second region (310b), and a partition wall (312) disposed between the first region (310a) and the second region (310b), the partition wall (312) including an opening (313);
a battery (360) disposed between the second region (310b) of the support structure (310) and the rear plate (215; 390);
a protection member (350) disposed to block at least a portion of the opening (313); and
a heat dissipation member (340) disposed from a portion of the first region (310a) through the opening (313) to a portion of the second region (310b), a portion of the heat dissipation member (340) disposed between the second region (310b) and the battery (360).

2. The electronic device of claim 1, wherein the housing comprises a first housing part (210), and a second housing part (220; 301) rotatably connected to the first housing part, the second housing part including the support structure (310) and the rear plate (215; 390), and
wherein the electronic device further comprises a flexible display (250; 320) disposed at the housing, and the support structure (310) is disposed between a portion of the flexible display (250; 320) and the heat dissipation member (340).

3. The electronic device of claim 1 or 2, wherein the protection member (350) is disposed to face a surface of the support structure (310) with a gap therebetween, and the heat dissipation member (340) is disposed to pass through the gap between the protection member (350) and the surface of the support structure (310).

4. The electronic device according to any one of claims 1 to 3, wherein the protection member (350) includes a buffer portion (351) which is disposed to face a side surface of the battery (360) and configured to be elastically deformable.

5. The electronic device of claim 4, wherein the protection member (350) further includes a support portion (352) having a strength greater than the buffer portion and disposed to face the one side surface of the battery (360) with the buffer portion interposed therebetween.

6. The electronic device according to any one of claims 1 to 5, wherein the protection member (350) includes a non-adhesive portion (354) at least partially disposed in the opening (313).

7. The electronic device of claim 6, wherein the protection member (350) further includes an adhesive layer (353) coupled to a portion of the partition wall (312), and the non-adhesive portion is disposed on one side surface of the adhesive layer.

8. The electronic device according to any one of claims 1 to 7, wherein the protection member (350) is disposed to face one side surface of the battery (360) while being spaced apart from the one side surface of the battery (360).

9. The electronic device according to any one of claims 1 to 8, wherein the partition wall (312) includes a first rib (312a) and a second rib (312b) disposed to face each other with the opening (313) interposed therebetween, and a portion of the protection member (350) is disposed on at least one of the first rib (312a) or the second rib (312b).

10. The electronic device of claim 9, wherein the first rib (312a) includes a curved surface at an end facing the second rib (312b), and the second rib (312b) includes a curved surface at an end facing the first rib (312a).

11. The electronic device according to any one of claims 1 to 10, further comprising:
a circuit board (271, 272) disposed on the first region (310a); and
a heat source (371) disposed on the circuit board (271, 272).

12. The electronic device of claim 11, wherein at least a portion of the heat dissipation member (340) is disposed to face the heat source and is configured to transfer heat emitted from the heat source to the battery (360).

13. The electronic device of claim 11 or 12, wherein a portion of the heat dissipation member (340) is disposed between the support structure (310) and the circuit board (271, 272), and the heat source is disposed between the heat dissipation member (340) and the circuit board (271, 272).

14. The electronic device of any one of claims 1 to 13, wherein the support structure (310) further includes a seating portion (311) in which the heat dissipation member (340) is positioned.

15. The electronic device of claim 14, wherein the seating portion (311) at least partially corresponds to the shape of the heat dissipation member (340).
